# EUROPEAN PATENT APPLICATION

(11) **EP 1 829 601 A1**
(43) Date of publication of application: **05.09.2007**
(21) Application number: 04805112.2
(22) Date of filing: 21.12.2004
(51) Int. Cl.: B01D 61/06, B01D 61/10, F04B 9/115

(54) **SEAWATER DESALINATION SYSTEM USING REVERSE OSMOSIS**

(71) Applicant: Bolsaplast S.A., 08203 Sabadell (Barcelona) (ES)
(72) Inventor: PARES CREVILLE, Antonio, E-08203 SABADELL (BARCELONA) (ES)
(74) Representative: PROPI, S.L.
(86) International application number: PCT/ES2004/000569
(87) International publication number: WO 2006/067241

(57) **Abstract**

Reverse osmosis sea water desalination system, which comprises a reverse osmosis membrane, a boost pump and a feed device for distributing the water supplied by the pump and using the pressure of the water rejected by the membrane, wherein the feed device (2) comprises two hydraulic cylinders (7) and (8), each consisting of two jacketed cylinders (71, 72) and (81, 82), respectively that face one another and are each fastened to intermediate bodies (73) and (83) respectively, with two separate chambers (74, 75) and (84, 85), the pistons (76, 77) and (86, 87) of which are connected by common rods (78) and (88) respectively, a central interconnection body (9) that is fastened to the intermediate bodies (73, 83), which have a number of internal pipes that enter the chambers (74, 75, 84, 85) and enter pipes that (12) communicate with the front (7a, 7b, 8a, 8b) and rear (7c, 7d, 8c, 8c) cavities and a number of sliding pieces (10) and (11) that are housed in the chambers (74, 75, 84, 85) and can move between two end positions.

## Description

### Object of the invention

The present invention relates, as its title indicates, to a reverse osmosis sea water desalination system, said system being of the type that comprises a reverse osmosis membrane with a pressurised water inlet, an osmotised water outlet and a rejected water outlet, the system also having a boost pump for the sea water and a device for distributing the pressurised water supplied by the pump and using the pressure of water rejected by the osmosis membrane.

### Background of the invention.

There are currently several different systems on the market for reducing the consumption needed to propel a fluid at high pressure towards a reverse osmosis membrane or towards any other element that rejects part of the liquid at a pressure which is lower than that at which it entered, but not inconsiderable.

A specific example of this type of systems is disclosed in Spanish invention patent 9901702, which specifically consists of a reverse osmosis sea water desalination system. In this system, to optimise the performance of the pump that is responsible for propelling the sea water to be osmotised and reduce the energy consumption of said pump, a double-acting hydraulic cylinder is used, which is fed with the pressurised water supplied by the pump and alternately propels the water contained in the two cavities or end pistons, propelling it towards the osmosis membrane.

Additionally, the water rejected by the membrane is driven towards the back chamber of the hydraulic cylinder taking the forward direction of the cylinder as a reference in each stroke, which makes it possible for the rejected water to collaborate with the pressurised water supplied by the pump in order to move said cylinder in the forward direction corresponding to each working cycle.

The alternation of the inlet of pressurised water supplied by the pump and water rejected by the osmosis membrane, and consequently the reversal of movements in the hydraulic cylinder, is controlled by a number of external valves actuated by the hydraulic cylinder.

This system has the drawback that when the cylinder reaches one of the end positions it momentarily stops, which brings about a reduction in the flow of water supplied to the osmosis membrane, the membrane thus being fed in a discontinuous or non-uniform manner.

Another of the drawbacks that this system presents is that the cylinder and the flow reversal valves is connected via external pipes which involves a risk of said pipes breaking and therefore damaging the system, as well as involving an increase in the space required to house the feed device.

Another example of prior art to be mentioned is that disclosed in patent US5462414 which, like the previous case, has a single hydraulic cylinder that describes alternating movements as it alternately receives the pressurised liquid from a pump at opposite ends, with the water rejected from the reverse osmosis membrane collaborating in the movement of said cylinder.

As in the previous case, the alternating inlet of pressurised fluid from the pump and water rejected by the membrane from opposite sides of the cylinder is carried out by means of a number of flow reversal valves, at least one of said valves being situated outside the cylinder, which requires external pipes and involves a risk of said pipes breaking.

As in the previous case, the use of a single hydraulic cylinder involves a momentary interruption of the pressurised fluid supplied to the osmosis membrane when said cylinder reverses the direction of movement.

Another of the problems that these systems generally present is that the body or piston of the cylinder is made from metal materials which wear away in a relatively short time as a result of corrosion, particularly when the fluid to be propelled is sea water with a high percentage of salt.

### Description of the invention

The reverse osmosis sea water desalination system that is object of the present invention, being of the type that comprises a reverse osmosis membrane, a boost pump and a feed device for the membrane with at least one hydraulic cylinder for distributing the pressurised water supplied by the pump and using the pressure of the water rejected by the osmosis membrane, has a number of constructional features aimed at providing said feed device, which includes all the elements needed for it to function correctly, with a compact construction eliminating the existence of external valves or pipes, except for the pipes that connect said device with the reverse osmosis membrane, with the exterior pump and with the pipe for rejected water that has been used.

Another of the purposes of the present invention is to eliminate the problems of corrosion usually suffered by these feed devices, using for this pieces of plastic material that can perfectly bear the working pressure resulting from the compact nature of the system.

The use of this material, in addition to eliminating problems of corrosion, makes it possible to considerably reduce the manufacturing costs.

Another of the purposes of this invention is to eliminate interruptions in the supply of pressurised water to the reverse osmosis membrane or the discontinuity of said supply, which usually occurs in the known systems when the direction of flow in the hydraulic cylinder is being reversed.

This problem is resolved by using a combination of two hydraulic cylinders that move alternately in opposite directions so that when one of them is close to one of the end positions of its useful stroke it causes the pressurised water from the pump to be diverted to the other hydraulic cylinder, the latter automatically becoming the operative hydraulic cylinder, thus ensuring that the reverse osmosis membrane is continuously and uniformly supplied.

To do this and according to the invention, this feed device comprises two hydraulic cylinders connected to one another by a central interconnection body and a number of sliding pieces integrated into said hydraulic cylinders, which are responsible for establishing the necessary hydraulic interconnections to ensure that the hydraulic cylinders function alternately and there is a continued supply of pressurised fluid to the reverse osmosis membrane.

Each of the hydraulic cylinders comprises two jacketed cylinders facing one another, which define separate cavities and are fastened to an intermediate distribution body made from a plastic material with two separate chambers for the circulation of pressurised water from the pump and water rejected from the reverse osmosis membrane respectively.

Each of the hydraulic cylinders also comprises two pistons housed in the respective jackets, the pair of pistons corresponding to the same hydraulic cylinder, being connected by a common rod that passes through the intermediate distribution body of the corresponding hydraulic cylinder.

The central interconnection body made from a plastic material acts as a connecting member for the two hydraulic cylinders and it is fastened to the intermediate distribution bodies of the hydraulic cylinders. There are a number of holes in said central interconnection body for the inlet of pressurised water from the pump, the outlet of pressurised water towards the reverse osmosis membrane, the inlet of water rejected by the membrane and the outlet of rejected water that leaves the system.

There is also a plurality of internal pipes defined in said central body that enter the chambers of the intermediate bodies and pipes that communicate with the front and back cavities defined by the pistons in each of the hydraulic cylinders.

The aforementioned sliding pieces, which are responsible for different hydraulic interconnections depending on the position of the pistons of the hydraulic cylinders, are housed in the chambers of the intermediate bodies of said hydraulic cylinders, it being possible for said sliding pieces to move between two end positions in which they establish different interconnections between the internal pipes of the central body and the chambers of the intermediate bodies of each hydraulic cylinder.

This compact construction, in addition to considerably reducing the size of the feed device that supplies the osmosis membrane, makes it possible to cluster all the interconnection pipes of the hydraulic cylinders in its interior, thus completely eliminating the use of external pipes, except for those that connect the system with the reverse osmosis membrane, with the pump and with the rejected water outlet that leaves the system.

The rods of the hydraulic cylinders have a number of intermediate thicker sections for the selective movement of the sliding pieces of a certain cylinder when the pistons of said cylinder approach one of the ends of their stroke.

In turn, the sliding pieces have a surface that is in permanent contact with one of the surfaces of the central interconnection body, which the internal pipes enter.

The sliding pieces have a central rebate on said contact surface for the interconnection of at least two of the internal pipes of the central body and a clip on their other end by which they are mounted and can slide on the rod of the corresponding hydraulic cylinder.

These sliding pieces have a rear rebate wherein a spring is housed, covered by a protective sheath made of a plastic material. This spring is positioned between said sliding piece and the rod of the corresponding hydraulic cylinder, pressing the contact surface of said sliding piece against the central interconnection body, thus preventing leakages in the flow of the fluid.

The pistons of the hydraulic cylinders alternately describe strokes in opposite directions, alternating the propulsion of pressurised water towards the entry of the membrane and the use of the water rejected by the membrane in order to collaborate with the pressure provided by the pump to propel the hydraulic cylinder that is operative in each cycle.

As has been mentioned, the alternate functioning of the hydraulic cylinders provides a continuous flow of pressurised water towards the entry of the reverse osmosis membrane, thus achieving better performance than systems that use a single hydraulic cylinder.

Finally, it must be mentioned that the pipes that connect with the front and back cavities defined by the pistons in each of the hydraulic cylinders consist of concentric chambers formed by the walls of the jackets of the cylinders and by the drillholes in the intermediate body of said hydraulic cylinders, thus avoiding the need for the fluid to flow through external pipes.

### Description of the figures.

To complement the description being made and in order to aid a better understanding of the invention's characteristics, a set of illustrative and non-limiting drawings integral to said description is attached, which are as follows:
- Figure 1: shows a diagrammatic view of the reverse osmosis sea water desalination system.

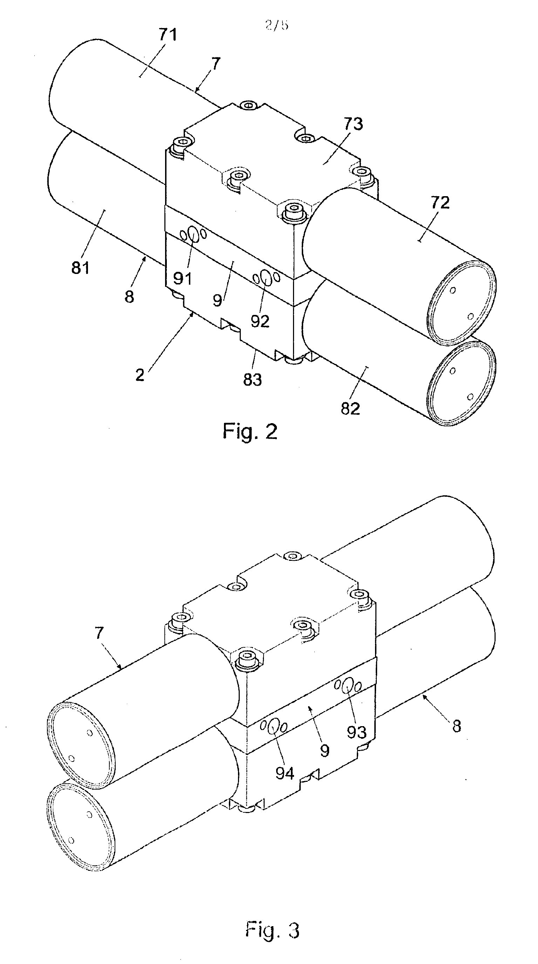

- Figures 2 and 3: respectively show a front perspective view and a back perspective view of the feed device that supplies the osmosis membrane.
- Figure 4: shows an elevation view of the device shown in figures 2 and 3, wherein the hydraulic cylinders have been cross-sectioned on a vertical plane and the interior pipes of the central interconnection body are shown by means of transparent lines, it being possible to observe the device during the operative movement of the hydraulic cylinder that occupies the upper position in the figure.
- Figure 5: shows a similar view to the previous one, wherein the sliding pieces of the upper cylinder have changed position as said upper cylinder reaches an end position, said position causing the operative movement of the hydraulic cylinder that occupies the lower position in the figure.
- Figure 6: shows a profile view, cross-sectioned on a vertical plane of one of said sliding pieces that is at a certain distance from the rod of one of the hydraulic cylinders, it being possible to observe the intermediate spring in said figure.

### Preferred embodiment of the invention

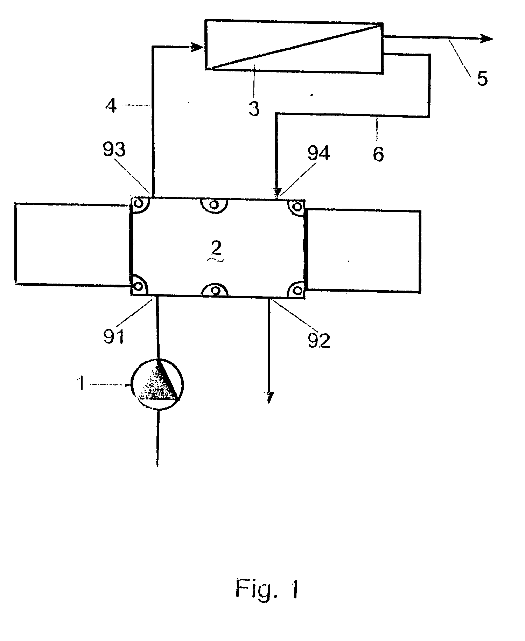

As can be observed in figure 1, this system comprises a pump (1) that is responsible for propelling the water to be desalinated towards a feed device (2) and a reverse osmosis membrane (3) which is supplied by the device (2) by means of an exterior pipe (4).

Said osmosis membrane (3) has an outlet pipe (5) for the osmotised water and an outlet pipe (6) that returns the water rejected by the membrane (3) to the device (2).

Said device (2) comprises two hydraulic cylinders . (7, 8) that are connected to one another by a central interconnection body (9) wherein there is a hole (91) for the inlet of pressurised water supplied by the pump (1), a hole (92) for the outlet of water rejected by the device (2) that leaves the system, a hole (93) for the connection of the pipe (4) that leads the pressurised water to the membrane (3) and a hole (94) for the inlet of rejected water from the membrane (3) which flows to said hole (94) through the exterior pipe (6).

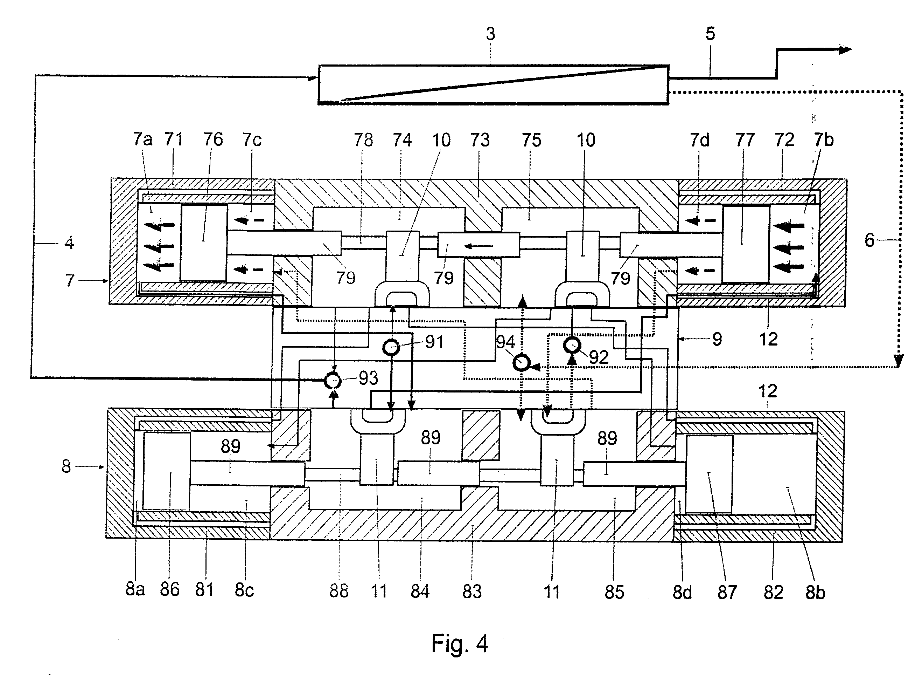

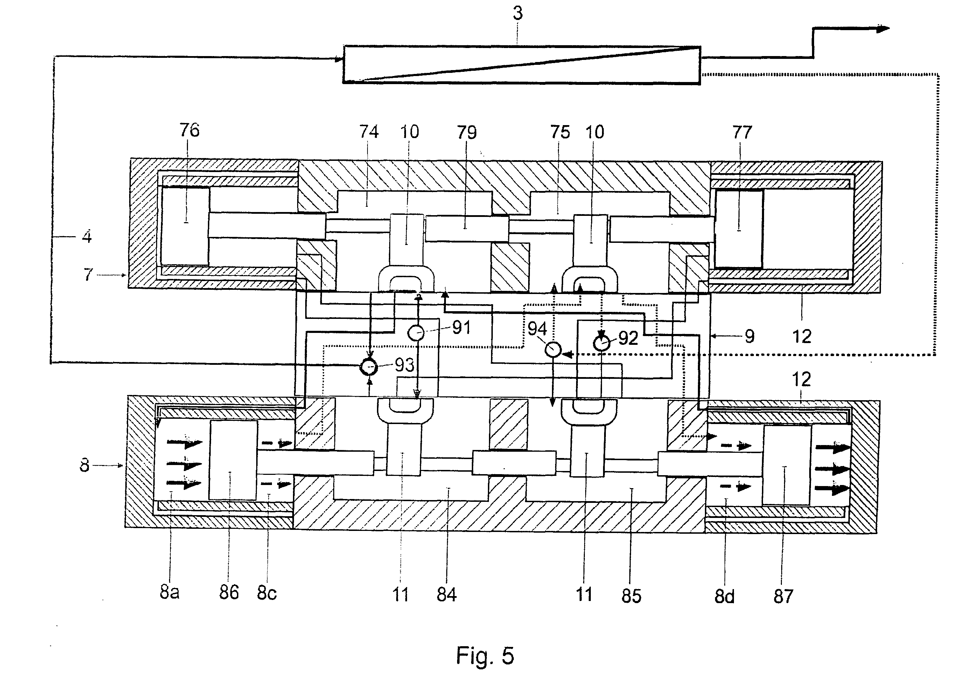

As can be observed in figures 4 and 5, the hydraulic cylinders (7 and 8) of the device (2) consist of two pairs of jacketed cylinders (71, 72) and (81, 82), which face one another and are each fastened to intermediate distribution bodies (73, 83). Each of the intermediate distribution bodies (73, 83) define two separate chambers (74, 75) and (84, 85).

The jackets (71, 72) of the hydraulic cylinder (7) each house moveable pistons (76, 77) which are connected to one another by a common rod (78) that passes through the separate cavities (74, 75) of the intermediate distribution body (73).

The hydraulic cylinder (8) also has two pistons (86, 87) housed inside the jackets (81, 82) that can move longitudinally and which are connected to one another by a common rod (88) that passes through the cavities (84, 85) of the intermediate body (83).

The pistons (76, 77) divide the interior of the cylinders (71, 72) into two front cavities (7a, 7b) and two rear cavities (7c, 7d).

The pistons (86 and 87) of the hydraulic cylinder (8) also divide the interior of the cylinders (81 and 82) into two front cavities (8a and 8b) and two rear cavities (8c and 8d).

The central interconnection body (9) also has holes (91, 92, 93 and 94) for a plurality of interior pipes, as shown in figures 4 and 5, which temporarily or permanently connect said holes to the chambers (74, 75) and (84, 85), with the front cavities (7a, 7b) (8a, 8b) and/or with the rear cavities (7c, 7d) (8c, 8d) of the hydraulic cylinders (7 and 8).

The interconnection of these pipes is determined by the position of the sliding pieces (10) that are mounted inside the chambers (74, 75) and of the sliding pieces (11) that are mounted inside the chambers (84, 85) of the hydraulic cylinder (8).

These sliding pieces (10 and 11) are mounted respectively and can move longitudinally on the rods (78 and 88) of the respective hydraulic cylinders (7, 8).

Said rods (78, 88) have thicker sections (79, 89) that act laterally on the sliding pieces (10, 11) causing them to change position when the rods (78, 88) approach the end position of the stoke of the pistons (76, 77) or (86, 87).

With this composition, in the operative state shown in figure 4, the pressurised water propelled by the pump (1) enters the device (2) through the inlet (91) in the central interconnection body (9), being guided by the interior pipes towards the chambers (74, 84) of the hydraulic cylinders (7 and 8). In this position, the sliding piece housed in the chamber (84) diverts the pressurised water propelled by the pump towards the front cavity (7b) of the hydraulic cylinder (7) causing the set of pistons (76 and 77) to move and propelling the sea water contained in the cavity (7a) towards the osmosis membrane (3), passing through the chamber (84), the outlet (93) and the exterior pipe (4).

In the position shown in said figure 4, the water rejected by the membrane (3) enters the chambers (75 and 85) of the hydraulic cylinders through the inlet hole (94) and through internal pipes in the central body (9), passing from the chamber (85), through one of the interior pipes in the central body (9), to the rear cavity (7c) of the hydraulic cylinder (7), so that the rejected water thus collaborates in the movement of the pistons (76 and 77).

In turn, as a result of the movement of the piston (77), the water evacuated from the rear chamber (7d) enters the chamber (85) through one of the interior pipes in the central body (9), being diverted by the sliding piece (11) that is housed in said cavity (85) towards the evacuation hole (92) whereby it leaves the system.

When the pistons (76 and 77) approach the end of the stroke according to the forward direction shown in figure 4, the thicker sections (79) of the rod (78) drag the sliding pieces (10) towards the position shown in figure 5. In this new position the sliding piece (10) that is housed in the cavity (74) causes the water propelled by the pump (1) to be diverted towards the cavity (8a), consequently bringing about the movement of the pistons (86 and 87) in the direction shown in figure 5.

In this position the water evacuated from the cavity (8c) is diverted by the sliding piece (10) in the chamber (75) towards the rejected water outlet hole (92).

Likewise, the rejected water from the membrane (3) which enters the device (2) through the hole (94) is driven to the chamber (75), passing from this chamber to the rear cavity (8d), thus collaborating in the movement of the pistons (86 and 87).

To make it possible to temporarily interconnect cavities (7a, 7b, 7c, 7d) and cavities (8a, 8b, 8c and 8d), without using pipes outside the device, the space between the jackets in the cylinders (71, 72) and (81 and 82) define concentric chambers generically referred to as (12).

When the pistons (86 and 87) approach the end of their stroke, moving in the direction shown in figure 5, the thicker sections (89) will cause the position of the sliding pieces (11) to change and the hydraulic cylinder (7) will once again enter into action.

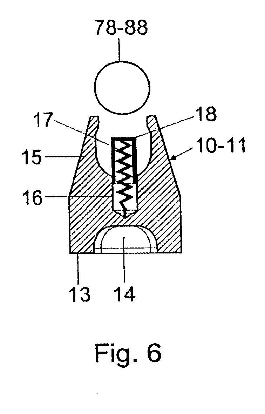

In order to make the selective interconnection of the internal pipes in the central interconnection body possible, the sliding pieces (10 and 11) have identical configurations, and a cross-section of one of the pieces (10 or 11) can be observed in figure 6. Said sliding pieces (10, 11) have a contact surface (13) that touches the opposite surface of the central body (9), there being a central rebate (14) on said contact surface (13) and on the opposite surface a clip (15) by which it may be mounted on the corresponding rod (78, 88). Said sliding pieces (10, 11) also have a rebate (16) in their rear area to house a spring (17), which ensures that the surface (13) remains in contact with the opposite surface of the central interconnection body (9). Each spring (17) is covered by a protective sheath (18) made of a plastic material, which prevents it coming into contact with the corresponding rod (78, 88).

Once the nature of the invention has been adequately described, as has an example of a preferred embodiment, it must be noted that the materials, form, size and layout of the described elements may be modified, provided that this does not involve altering the essential characteristics of the invention described in the following claims.

## Claims

1. Reverse osmosis sea water desalination system; of the type that comprises: a reverse osmosis membrane with a pressurised water inlet, an osmotised water outlet and a rejected water outlet, a boost pump and a feed device with at least one hydraulic cylinder for distributing the pressurised water supplied by the pump and using the pressure of the water rejected by the osmosis membrane; **characterised in that** the feed device (2) comprises:
- a first hydraulic cylinder (7) consisting of: two jacketed cylinders (71, 72) which face one another and are fastened to an intermediate distribution body (73) that is made of a plastic material and has two separate chambers (74, 75) for the pressurised water from the pump (1) and rejected water from the osmosis membrane (3) to flow through respectively and two pistons (76, 77) housed in the respective cylinders (71, 72), which are connected by a common rod (78) that passes through the intermediate body (73),
- a second hydraulic cylinder (8) consisting of: two jacketed cylinders (81, 82) that face one another and are fastened to an intermediate distribution body (83) that is made of a plastic material and has two separate chambers (84, 85) for the pressurised water from the pump (1) and rejected water from the osmosis membrane (3) to flow through respectively and two pistons (86, 87) housed in the respective cylinders (81, 82), which are connected by a common rod (88) that passes through the intermediate body (83),
- a central interconnection body (9) that is made of a plastic material and fastened to the intermediate distribution bodies (73, 83) of the hydraulic cylinders (7, 8), said central interconnection body (9) having: a hole (94) for the inlet of rejected water from the membrane (3), a hole (92) for the outlet of rejected water that leaves the system, a hole (91) for the inlet of pressurised water from the pump (1), a hole (93) for the outlet of pressurised water towards the osmosis membrane (3), and a plurality of internal pipes that enter the chambers (74, 75, 84, 85) of the intermediate bodies (73, 83) and enter pipes (12) that communicate with the front cavities (7a, 7b, 8a, 8b) and with the rear cavities (7c, 7d, 8c, 8c) defined by the pistons (76, 77, 86, 87) inside the respective jacketed cylinders (71, 72, 81, 82) of the hydraulic cylinders (7, 8) and,
- a number of sliding pieces (10) (11) housed in the chambers (74, 75) (84, 85) of the intermediate bodies (73) (83) that can move between two end positions in which they establish different interconnections between the internal pipes in the central body (9) and a number of pipes (12) that enter the chambers (74, 75) (84, 85) of the intermediate bodies.

2. System, according to claim 1, **characterised in that** the rods (78, 88) of the hydraulic cylinders (7, 8) have intermediate thicker sections (79, 89) for the selective movement of the sliding pieces (10, 11) of a certain cylinder (7) (8) when the pistons (76, 77) (86, 87) of said cylinder approach the end of their stroke.

3. System, according to claim 1, **characterised in that** the sliding pieces (10, 11) have a surface (13) that is in permanent contact with one of the surfaces of the central body (9), which the internal pipes enter.

4. System, according to claim 3, **characterised in that** the sliding pieces (10, 11) have a central rebate on the contact surface (13) for the interconnection, through this, of at least two of the internal pipes of the central body (9).

5. System, according to claim 4, **characterised in that** the sliding pieces (10, 11) have a clip (15) on their rear end to mount them so that they may slide on the rods (78, 88) of the corresponding hydraulic cylinder.

6. System, according to claim 5, **characterised in that** the sliding pieces (10, 11) have a rear rebate (16) to house a spring (17) that is positioned between said sliding piece (10, 11) and the rod (78, 88) of the corresponding hydraulic cylinder (7, 8), the spring pressing the contact surface (13) of said sliding piece (10, 11) against the central interconnection body (9).

7. System, according to claim 7, **characterised in that** the spring (17) is covered by a protective sheath (18) made of a plastic material.

8. System, according to claim 1, **characterised in that** the rods (78, 88) of the hydraulic cylinders (7, 8) alternately describe strokes in opposite directions, alternating the propulsion of pressurised water towards the osmosis membrane (3) and using the rejected water from the membrane (4) to collaborate with the pressure provided by the pump (1) in order to move the hydraulic cylinder (7, 8).

9. System, according to claim 1, **characterised in that** the alternate functioning of the hydraulic cylinders (7, 8) provides a continuous flow of pressurised water towards the entry to the osmosis membrane (3).

10. System, according to claim 1, **characterised in that** the pipes (12) are defined in the concentric chambers between the jackets of the cylinders (71, 72, 81, 82) and in the walls of the intermediate bodies (73, 83).
There follow 5 sheets of drawings numbered correlatively.
